(19) Europäisches Patentamt

European Patent Office

Office européen des brevets

(11) **EP 0 805 733 B1**

(12) **EUROPÄISCHE PATENTSCHRIFT**

(45) Veröffentlichungstag und Bekanntmachung des Hinweises auf die Patenterteilung:
**26.07.2000 Patentblatt 2000/30**

(21) Anmeldenummer: **96901324.2**

(22) Anmeldetag: **23.01.1996**

(51) Int Cl.⁷: $B23K\ 26/08$, $B23K\ 20/04$

(86) Internationale Anmeldenummer:
**PCT/EP96/00263**

(87) Internationale Veröffentlichungsnummer:
**WO 96/22855 (01.08.1996 Gazette 1996/35)**

(54) **LASERUNTERSTÜTZTES PLATTIEREN VON BAND**

LASER-ASSISTED PLATING OF STRIP

PROCEDE POUR L'ASSEMBLAGE DE BANDES ASSISTE PAR LASER

(84) Benannte Vertragsstaaten:
**AT BE CH DE DK ES FR GB GR IE IT LI LU MC NL PT SE**

(30) Priorität: **25.01.1995 DE 19502140**

(43) Veröffentlichungstag der Anmeldung:
**12.11.1997 Patentblatt 1997/46**

(73) Patentinhaber: **Thyssen Krupp Stahl AG 40211 Düsseldorf (DE)**

(72) Erfinder:
• **PIRCHER, Hans
  D-45481 Mülheim (DE)**
• **KAWALLA, Rudolf
  D-46244 Bottrop (DE)**
• **POPRAWE, Reinhard
  D-52072 Aachen (DE)**

• **SUSSEK, Gerd
  D-45481 Mülheim (DE)**

(74) Vertreter: **Knauf, Rudolf, Dipl.-Ing. et al
  Cohausz & Florack,
  Kanzlerstrasse 8a
  40472 Düsseldorf (DE)**

(56) Entgegenhaltungen:
  **EP-A- 0 205 183       FR-A- 2 328 543
  US-A- 4 260 095       US-A- 4 471 204**

• **PATENT ABSTRACTS OF JAPAN vol. 013, no. 100 (M-805), 9.März 1989 & JP,A,63 290694 (NIPPON STEEL CORP), 28.November 1988,**

Bemerkungen:
  Die Akte enthält technische Angaben, die nach dem Eingang der Anmeldung eingereicht wurden und die nicht in dieser Patentschrift enthalten sind.

**Beschreibung**

Die Erfindung bezieht sich auf ein Verfahren zum Fügen von Bändern und/oder Blechen aus metallischen Werkstoffen, bei dem mindestens zwei Bänder und/oder Bleche in bezug auf ihre Längsachsen versetzt zueinander und mit Überstand einander überlappend unter einem spitzen Winkel aufeinander zulaufend kontinuierlich in einen Fügespalt eingeführt und in einem Umformstich aufeinandergepreßt werden, so daß sie an ihren in Kontakt gebrachten Oberflächen ganz oder teilweise fest miteinander verbunden werden, indem entweder bei keine niedrigschmelzende metallische Oberfläche aufweisenden Bändern und/oder Blechen mindestens ein Blech und/oder Band der in Kontakt zu bringenden Bleche/Bänder an seiner Oberfläche unmittelbar vor dem physischen Kontakt im Fügespalt ganz oder teilweise durch einen Laserstrahl erhitzt, jedoch nicht aufgeschmolzen werden, oder bei vergleichsweise niedrigschmelzende metallische Oberflächen aufweisenden Bändern und/oder Blechen mindestens ein Blech und/oder Band der in Kontakt zu bringenden Bleche/Bänder an seiner Oberfläche unmittelbar vor dem physischen Kontakt im Fügespalt ganz oder teilweise durch einen Laserstrahl erhitzt, jedoch mit Ausnahme seiner niedrigschmelzenden Oberfläche nicht aufgeschmolzen wird.

Niedrigschmelzende metallische Oberflächen aufweisende Bänder und/oder Bleche können auf verschiedene Art und Weise verwirklicht sein. Insbesondere kann die niedrigschmelzende metallische Oberfläche von entsprechenden Überzügen gebildet sein.

Verfahren dieser Art werden eingesetzt, um z.B. Stahlbleche mit metallischen Überzügen zu versehen. Solche Überzüge dienen dem Korrosionsschutz, dem Verschleißschutz, einer höheren Oberflächenhärte, einem dekorativeren Aussehen, der Verbesserung von Gleiteigenschaften oder zur Materialauftragung an Verschleißstellen. Je nach Verfahren und verwendeten Werkstoffen können diese Überzüge unterschiedliche Dicken haben.

Bei einem bekannten Verfahren zum Plattieren von Band, und zwar einem Kaltpreßschweißen, wird weicher unlegierter Stahl oder nichtrostender Stahl mit Aluminium, Kupfer oder Messing durch Kaltwalzen plattiert. Hierbei werden meist dünne Bänder oder Bleche bis zu Dicken um 4 mm erhalten. Um eine befriedigende Verbindung der verschiedenen Metalle zu erhalten, ist eine Umformung im Kontaktbereich notwendig. Durch diese Umformung werden Oxidschichten oder Oberflächenfilme aufgebrochen, so daß Metalle, welche noch nicht der umgebenden Atmosphäre ausgesetzt waren, miteinander verbunden werden. Für diesen sogenannten Plattierungsverbund ist eine Schwellenformänderung von üblicherweise mindestens 30% in einem Kaltwalzstich erforderlich. Dafür müssen hohe Walzkräfte eingesetzt werden. Zudem werden hohe Anforderungen an die Oberflächen im Plattierungsbereich gestellt, die deshalb vorher entsprechend zu reinigen sind. Dadurch ist das Verfahren gerätetechnisch aufwendig. Darüberhinaus sind die Werkstoffkombinationen, die sich zum Kaltwalzplattieren eignen, begrenzt (Zeitschrift "Aluminium", 56. Jahrg. 1980.2, Seite 147/149).

Als ein weiteres Kaltpreßschweißverfahren ist das Sprengplattieren von unlegiertem, niedriglegiertem oder nichtrostendem Stahl mit anderen metallischen Werkstoffen bekannt. Dabei werden verschiedene Werkstoffe direkt oder über Zwischenschichten plattiert. Sprengplattierungen haben Dicken von meist über 4 mm. Ein Beispiel sind die als Transition Joints bezeichneten sprengplattierten Übergangsstücke für Schweißverbindungen zwischen Baustahl und der höherfesten Al-Legierung AlMg 4,5, die mit Hilfe einer Zwischenschicht aus Al 99,5 ausgeführt werden muß, um die Gebrauchseigenschaften zu erreichen, die von Schmelzschweißverbindungen mit Kraftübertragung senkrecht zur Plattierungsebene gefordert werden. Bei diesem Verfahren geht der Vorteil einer gewissen Unabhängigkeit in bezug auf die Werkstoffkombinationen einher mit dem Nachteil, daß mehrere Schichten gefügt werden müssen. So ist auch diese Art der Bandherstellung an das Vorhandensein aufwendiger Vorrichtungen gebunden (Zeitschrift "Aluminium", 56. Jahrg. 1980.2, Seite 147/149).

Ferner ist bekannt, Stahl und Aluminium durch Schmelzschweißen miteinander zu verbinden. Dabei können übliche Schweißverfahren, wie das WIG- oder das MIG-Verfahren Anwendung finden. In jedem Fall wird das Verfahren so durchgeführt, daß im Walzspalt nur das Aluminium in flüssigem Zustand vorliegt. Nachteilig ist bei diesem Verfahren, daß an der Grenzschicht beider Werkstoffe eine intermetallische Verbindung entsteht, die der schwächste Punkt der Schweißverbindung ist (Zeitschrift "Aluminium", 56. Jahrg. 1980.2, Seite 147/149).

Bei einem anderen bekannten Fügeverfahren, und zwar auch einem Schmelzschweißen, wird die zum Aufschmelzen erforderliche Energie mittels eines Laserstrahls in den Walzspalt eingebracht. Bei diesem bekannten Verfahren werden beide zu fügende Teile aufgeschmolzen. Sofern bei diesem Verfahren Aluminium und Stahl miteinander verbunden werden sollen, dürften die gleichen Probleme wie bei den anderen Schmelzverfahren entstehen (DE 37 13 975 A1).

Schließlich ist ein Verfahren zum Fügen von Metallbändern bekannt (US-PS 44 71 204), bei dem die beiden Metallbänder kontinuierlich aufeinander zulaufend in einen Fügespalt eingeführt und in einem Umformstich aufeinandergepreßt werden, so daß sie an ihren in Kontakt gebrachten Oberflächen fest miteinander verbunden werden. Die Oberflächen der in Kontakt zu bringenden Bänder werden dabei unmittelbar vor dem physischen Kontakt im Fügespalt durch einen Laserstrahl erhitzt, wobei der erhitzte Bereich entweder aufgeschmolzen oder lediglich auf eine Diffusionstemperatur erhitzt wird. Bei diesem Stand der Technik ist allerdings nicht vorgesehen, daß die beiden zusammenzuführenden Bänder bezüglich ihrer Achsen seitlich versetzt sind und mit Überstand einander überlappen. In solchen Fällen besteht die Gefahr, daß der überstehende Bereich des weicheren Bandes im Fügespalt abgeschert wird.

Schließlich ist ein Verfahren zum Fügen von Metallbändern bekannt (JP-A- 63 29 0694), daß mit dem vorbeschriebenen praktisch übereinstimmt. Bei diesem Verfahren hat das eine Band eine geringere Breite als das andere und liegt mit seiner gesamten Breite auf dem breiteren Band auf. An beiden Rändern steht also das breitere Band über. Sofern von den beiden Bändern das Band mit dem seitlichen Überstand das weichere Material ist, kann es im überstehendem Bereich an der Kante des schmaleren Bandes im Fügespalt abgeschert werden.

Der Erfindung liegt die Aufgabe zugrunde, ein Verfahren zum Verbinden von einander überlappenden Bändern aus unterschiedlichen, nicht oder schwer schmelzschweißbarer metallischer Werkstoffe zu schaffen, das weniger aufwendig als das eingangs genannte Verfahren ist und bei dem ein Abscheren des überstehenden Bereichs des aus weicherem Werkstoff bestehenden Bandes oder Bleches nicht auftritt.

Diese Aufgabe wird dadurch gelöst, daß beim Aufeinanderpressen ein Abscheren des überstehenden Bereichs des weicheren Bleches/Bandes durch Gegendruck vermieden wird. Insbesondere wird der erforderliche Gegendruck durch Unterlegstreifen oder eine entsprechend kalibrierte Walze auf der Seite des höherfesten Bleches/Bandes aufgebracht.

Das Vermeiden des Aufschmelzens der Bänder oder Bleche, die keine niedrigschmelzende metallene Oberfläche, wie Zink, Zinklegierungen, Aluminium oder Kupfer haben, insbesondere damit beschichtete Stahlbleche, ist dabei von erheblicher Bedeutung, da durch das Aufschmelzen und ein nachfolgendes Erstarren harte und damit spröde Werkstoffphasen entstehen können, die die Festigkeit der Verbindung wesentlich beeinträchtigen. Sofern jedoch eines der zu verbindenden Bänder/Bleche ein Stahlfeinblech mit Zink oder Zinklegierungsüberzügen ist, kann es zwar aufgrund des niedrigeren Schmelzpunktes dieser Oberflächen zu Aufmischungsreaktionen, insbesondere mit Aluminium und Aluminiumlegierungen kommen, die teilweise über schmelzflüssige Phasen ablaufen, doch kommt es auch in diesen Fällen bei praktisch gleichen Fügeparametern nicht zu nachteiligen Folgen für Gebrauchseigenschaften, insbesondere nicht zu Versprödungen, die sich auf das Umformverhalten der gefügten Verbindung nachteilig auswirken.

Damit die eingebrachte Energie voll für die Aktivierung an der Oberfläche zur Verfügung steht und nicht in das Innere des Bleches bzw. Bandes weitergeleitet wird und die Verformbarkeit des Teils über die gesamte Dicke erhöht, sollte der Laserstrahl das Blech möglichst nahe an der physischen Kontaktstelle der zu verbindenden Bleche/Bänder beaufschlagen. Durch das Erhitzen des Bleches/Bandes an dessen Oberflächen vor dem Einlauf in den Fügespalt brechen die obersten Oberflächenfilme bzw. Oxidschichten der Werkstoffe bereits unter geringerem Druck als bei herkömmlichen Verfahren auf, so daß schneller als in kaltem Zustand eine haftende Verbindung entstehen kann. Dadurch wird entweder bei im Vergleich zu herkömmlichen Kaltpreßschweißverfahren gleichbleibendem Andruck die Festigkeit der Verbindung der Werkstoffoberflächen erhöht, oder aber es ist zum Erreichen einer bestimmten Festigkeit ein wesentlich geringerer Druck erforderlich. Es reicht typischerweise eine Gesamtdickenabnahme von 0,3% bis 30% aus, um eine festhaftende Verbindung zu erzielen.

In dem Verfahren werden die Bänder oder Bleche parallel zu ihrer Längsachse miteinander verbunden werden, wobei die Stoßart wahlweise in Form eines Parallelstoßes oder in Form eines Überlappstoßes ausgeführt werden kann. Besonders vorteilhaft läßt sich das Verfahren zum Fügen von Stahl mit Aluminium oder Aluminiumlegierungen, mit Kupfer oder Kupferlegierungen, insbesondere mit Messing, einsetzen.

Eine Bedeutung kommt der Anwendung der Erfindung im Automobilbau zu. Durch die Kombination unterschiedlicher Werkstoffe und Blechdicken werden mit der Technologie der sogenannten Tailored Blanks gewichts- und gebrauchsoptimierte Rohbau-Blechpartien erzeugt. Die Erfindung führt zu einer nächsten Generation von Tailored Blanks, in der nicht nur verschiedene Stahlwerkstoffe unterschiedlicher Dicken in einem Tailored Blank verarbeitet werden können, sondern ein Flansch aus anderem Werkstoff gefügt werden kann. Dabei wird der Fügeprozeß, wie bei Tailored Blanks, am ebenen Blech durchgeführt. Erst nach dem Tiefziehprozeß ergibt sich dann der 3D-Formflansch, an den im Zusammenbau direkt angeschlossen werden kann.

In einer weiteren Ausführung können nach dem Einfügen von Transition Joints in Tailored Blanks weitere Bleche aus dem zweiten Werkstoff auch mit unterschiedlichen Dicken angefügt werden. Auf diese Weise können direkt Tailored Blanks aus unterschiedlichen Metallen, z.B. Stahl und Aluminium, gefertigt werden.

Die erforderliche Leistung des Lasers braucht nicht sehr hoch zu sein, es reicht eine Energiedichte von weniger als 3 kWh/m$^2$ aus, um die Oberflächen thermisch zu aktivieren. Dafür kommen in Frage insbesondere $CO_2$-Laser, Fescskörperlaser oder Diodenlaserarrays.

Ein weiterer wesentlicher Vorteil hat sich bei der Erprobung des Verfahrens insofern gezeigt, als die zu verbindenden Bleche/Bänder an ihren zunderfreien Oberflächen zwar trocken und fettfrei sein sollten, aber darüber hinaus keiner aufwendigen mechanischen Reinigung durch Bürsten oder Schleifen bedürfen. Zum Einhalten der geringen Anforderungen an die Reinheit der Werkstoffoberflächen empfiehlt es sich, die laser-beaufschlagten Werkstoffoberflächen vor dem physischen Kontakt durch Schutzgas, insbesondere durch Inertgase wie Argon oder Stickstoff, vor Oxidation zu schützen.

In einer weiteren vorteilhaften Ausgestaltung des Verfahrens wird ein parallel zum Fügespalt linienförmig fokussierter Laserstrahl benutzt. Über dessen Fokusbreite läßt sich bei geometrisch starrer Anordnung und kontinuierlicher bzw. gepulster Einkopplung des Laser-Strahls die Breite der Fügezone genau bestimmen. Die Breite der Fügezone kann erweitert werden, indem der in den Fügespalt fokussierte Laserstrahl wiederholt parallel zum Fügespalt insbesondere durch ein Scanning-System bewegt wird.

Der hergestellte Werkstoffverbund kann auf verschiedene Arten nachbehandelt werden. So kann in einem nachfolgenden Walzstich der hergestellte Werkstoffverbund durch Kaltwalzen eine weitere Dickenreduktion erfahren oder aber durch Glühen in einen Zustand verbesserter Umformbarkeit überführt wird.

Im folgenden wird das erfindungsgemäße Verfahren anhand einer schematischen Darstellung näher erläutert. Typische Verfahrensparameter für eine Parallelstoßverbindung und für eine Überlappstoßverbindung sind der beigefügten Tabelle zu entnehmen.

In der schematischen Darstellung ist das Fügeverfahren von zwei Blechen als Überlappstoß dargestellt. Dafür wird der Grundwerkstoff mit einem parallel in derselben Ebene liegenden Unterlegestreifen und dem Auflagewerkstoff, der auf Grundwerkstoff und Unterlegestreifen zur Auflage gebracht wird, in den Fügespalt unter einem spitzen Winkel eingeführt. Der Unterlegestreifen dient der Abstützung des Auflagewerkstoffes im Fügespalt. Er verhindert, daß der den Grundwerkstoff überlappende Bereich des Auflagewerkstoffes abgequetscht wird.

Der Laserstrahl wird parallel zur Fügespaltebene fokussiert. Es kann mit einer parallel oder senkrecht zur Einfallsebene polarisierten Strahlung gearbeitet werden. Parallel polarisierte Strahlung erlaubt es, mit niedrigeren Energiedichten zu arbeiten. Die Achse der linienförmig fokussierten Laserstrahlung liegt grundsätzlich zentral im Fügespalt. Sie kann allerdings geringfügig zum Partner mit der geringeren Festigkeit verschoben sein. Die zu wählende Energiedichte für die beiden Partner hängt von den Werkstoffen und von der Vorschubgeschwindigkeit ab. Für die Energiedichteverteilung auf die beiden Partner gilt grundsätzlich, daß der Partner mit der höheren Festigkeit mit einer niedrigeren Energiedichte beaufschlagt wird. Gute Ergebnisse hat man mit einer Energiedichteverteilung von 30 bis 45 % auf Stahl und 55 bis 70 % auf Aluminium gemacht.

| Walzkraft | $F_w$ kN |
| --- | --- |
| Gesamtumformgrad | $\varepsilon_h$ % |
| Gesamtdicke v. d. Walzen | $h_0$ mm |
| Gesamtdicke n. d. Walzen | $h_1$ mm |
| Auflagendicke v. d. Walzen | $h_{0A}$ mm |
| Auflagendicke n. d. Walzen | $h_{1A}$ mm |
| gedrückte Länge | $l_d$ mm |
| Laser-Focusbreite (=Haftungsbreite) | $l_b$ mm |
| Bandvorschub | $v_b$ mm/min |
| Laserleistung | $P_{cw}$ kW |
| Walzdruck | $P$ kN/mm$^2$ |
| Energiedichte | $E_F$ kWh/m$^2$ |
| Bandbreite Grundwerkstoff | $b_1$ mm |
| Bandbreite Auflagewerkstoff | $b_2$ mm |
| Walzendurchmesser | $D$ mm |

$$\varepsilon_h = \frac{h_0 - h_1}{h_0}$$

$$P = \frac{F_w}{l_d * b_2}$$

$$E_F = \frac{P_{cw} * 100}{6 * l_b * v_b}$$

$$l_d = \sqrt{D/2 * (h_{0A} - h_{1A})}$$

## Lasergestütztes Plattieren von Band - Ausführungsbeispiele

| Versuch | Werkstoff-kombination | | Breite des Walzgutes | | Dicke vor dem Walzen | | Dicke nach dem Walzen | | Walzkraft | Umform-grad | gedrückte Länge | Bandvor-schub | Walz-druck | Energie-dichte |
|---|---|---|---|---|---|---|---|---|---|---|---|---|---|---|
| | Grundwerk-stoff | Auflage | Grundwerk-stoff | Auflage | Auflage | gesamt | Auflage* | gesamt | $F_W$ | $\varepsilon_h$ | $l_d$ | $v_b$ | $p$ | $E_F$ |
| | | | mm | mm | mm | mm | mm | mm | kN | % | mm | m/min | kN/mm² | kWh/m² |
| 1 | DC 04 | X 4CrNi 18-10 | 25 | 10 | 1.0 | 2.0 | 0.93 | 1.93 | 30 | 3.5 | 2.29 | 4.0 | 1.31 | 1.4 |
| 2 | DC 04 | X 4CrNi 18-10 | 30 | 25 | 1.0 | 2.0 | 0.96 | 1.96 | 80 | 2.0 | 1.73 | 4.0 | 1.05 | 1.2 |
| 3 | DC 04 | X 4CrNi 18-10 | 25 | 10 | 1.0 | 3.5 | 0.99 | 3.49 | 30 | 0.3 | 0.07 | 5.0 | 3.46 | 1.1 |
| 4 | DC 04 | Kupfer | 25 | 10 | 1.5 | 4.0 | 0.63 | 2.83 | 65 | 29.3 | 8.08 | 2.5 | 0.60 | 2.3 |
| 5 | DC 04 | Al 99 | 25 | 10 | 1.5 | 4.0 | 0.64 | 2.92 | 50 | 26.9 | 8.03 | 2.5 | 0.62 | 2.2 |
| 6 | DC 04 | Al 99 | 25 | 10 | 1.5 | 4.0 | 0.69 | 2.93 | 50 | 26.0 | 7.79 | 2.5 | 0.64 | 1.7 |
| 7 | DC 04 | Al 99 | 25 | 10 | 1.5 | 3.5 | 0.51 | 2.45 | 50 | 30.1 | 8.62 | 2.5 | 0.58 | 2.2 |
| 8 | DC 04 | AlMg 3 | 25 | 10 | 1.5 | 3.5 | 0.80 | 2.62 | 60 | 25.2 | 7.25 | 2.5 | 0.83 | 2.2 |
| 9 | DC 04 | AlMg 3 | 25 | 10 | 1.5 | 3.5 | 0.82 | 2.59 | 60 | 26.1 | 7.14 | 2.5 | 0.84 | 2.2 |
| 10 | DC 04 | Al 99 | 39(+29)** | 50 | 1.5 | 3.5 | 1.17 | 3.16 | 85 | 9.6 | 4.97 | 2.5 | 0.34 | 2.2 |
| 11 | DC 04 | Al 99 | 39(+29)** | 25 | 1.5 | 3.5 | 1.02 | 2.87 | 85 | 18.0 | 6.00 | 2.5 | 0.57 | 2.2 |
| 12 | DC 04 | Al 99 | 39(+29)** | 25 | 1.5 | 3.5 | 1.04 | 3.01 | 60 | 13.9 | 5.07 | 2.5 | 0.41 | 2.2 |
| 13 | DC 04 | AlMg 3 | 39(+29)** | 25 | 1.5 | 3.5 | 1.28 | 3.23 | 70 | 7.7 | 4.06 | 2.5 | 0.69 | 2.0 |
| 14 | X 4CrNi 18-10 | Al 99 | 39(+29)** | 30 | 1.5 | 3.0 | 1.14 | 2.64 | 80 | 12.0 | 5.20 | 2.5 | 0.51 | 2.9 |
| 15 | X 4CrNi 18-10 | AlMg 3 | 39(+29)** | 50 | 1.2 | 3.7 | 1.15 | 3.65 | 100 | 1.4 | 1.94 | 2.5 | 1.03 | 2.7 |
| 16 | DC 04 Z | AlMg0.4Si | 20(+30)** | 30 | 1.2 | 3.0 | 1.03 | 2.67 | 60 | 11.0 | 3.57 | 2.5 | 0.56 | 2.7 |
| 17 | DC 04 Z | AlMg0.4Si | 20(+30)** | 30 | 1.2 | 3.0 | 1.04 | 2.67 | 75 | 11.0 | 3.46 | 2.5 | 0.72 | 2.2 |
| 19 | DC 04 ZF | AlMg0.4Si | 20(+30)** | 30 | 1.2 | 2.7 | 1.01 | 2.46 | 75 | 8.9 | 3.77 | 2.5 | 0.66 | 2.3 |
| 21 | DC 04 ZE | AlMg0.4Si | 20(+30)** | 30 | 1.2 | 2.9 | 1.01 | 2.63 | 75 | 9.3 | 3.77 | 2.5 | 0.66 | 2.3 |

*) Mittelwert aus metallografisch ermittelten Dicken  
**) 29/30mm Teilstreifen nach dem Plattieren entfernt  
Walzendurchmesser: 150 mm  
Breite der Kopplungszone: 10 mm = Fokusbreite

Z : feuerverzinkt  
ZF: galvannealed  
ZE: elektrolytisch verzinkt

Parallelstoß

Überlappstoß

EP 0 805 733 B1

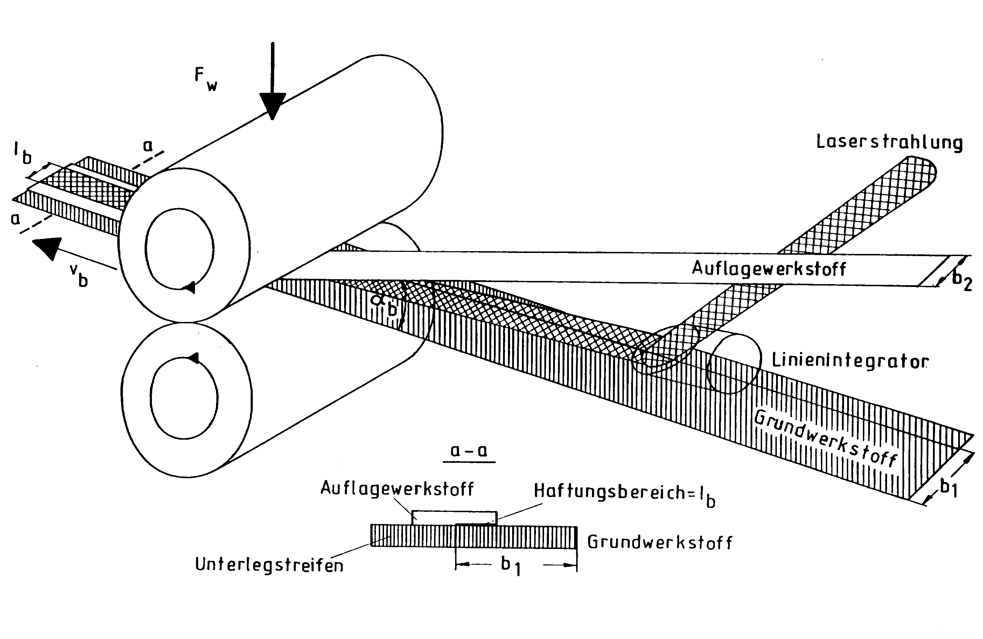

**Patentansprüche**

1. Verfahren zum Fügen von Bändern und/oder Blechen aus metallischen Werkstoffen, bei dem mindestens zwei Bänder und/oder Bleche in bezug auf ihre Längsachsen versetzt zueinander und mit Überstand einander überlappend unter einem spitzen Winkel aufeinander zulaufend kontinuierlich in einen Fügespalt eingeführt und in einem Umformstich aufeinandergepreßt werden, so daß sie an ihren in Kontakt gebrachten Oberflächen ganz oder teilweise fest miteinander verbunden werden, indem bei keine niedrigschmelzende metallische Oberflächen aufweisenden Bändern und/oder Blechen mindestens ein Blech und/oder Band der in Kontakt zu bringenden Bleche/Bänder an seiner Oberfläche unmittelbar vor dem physischen Kontakt im Fügespalt ganz oder teilweise durch einen Laserstrahl erhitzt, jedoch nicht aufgeschmolzen wird, **dadurch gekennzeichnet,** daß beim Aufeinanderpressen ein Abscheren des überstehenden Bereichs des weicheren Bleches/Bandes durch Gegendruck vermieden wird.

2. Verfahren zum Fügen von Bändern und/oder Blechen aus metallischen Werkstoffen, bei dem mindestens zwei Bänder und/oder Bleche in bezug auf ihre Längsachsen versetzt zueinander und mit Überstand einander überlappend unter einem spitzen Winkel aufeinander zulaufend kontinuierlich in einen Fügespalt eingeführt und in einem Umformstich aufeinandergepreßt werden, so daß sie an ihren in Kontakt gebrachten Oberflächen ganz oder teilweise fest miteinander verbunden werden, indem bei vergleichsweise niedrigschmelzende metallische Oberflächen aufweisenden Bändern und/oder Blechen, mindestens ein Blech und/oder Band der in Kontakt zu bringenden Bleche/Bänder an seiner Oberfläche unmittelbar vor dem physischen Kontakt im Fügespalt ganz oder teilweise durch einen Laserstrahl erhitzt, jedoch mit Ausnahme seiner niedrigschmelzenden Oberfläche, nicht aufgeschmolzen wird, **dadurch gekennzeichnet,** daß beim Aufeinanderpressen ein Abscheren des weicheren Bleches/Bandes im Überlappbereich durch Gegendruck vermieden wird.

3. Verfahren nach Anspruch 1 oder 2, **dadurch gekennzeichnet,** daß die Energiedichte des Laserstrahls im Bereich der laser-beaufschlagten Fläche geringer als 3 kWh/m$^2$ ist.

4. Verfahren nach einem der Ansprüche 1 bis 3, **dadurch gekennzeichnet,** daß durch Unterlegstreifen oder eine entsprechend kalibrierte Walze auf der Seite des höherfesten Bleches/Bandes der nötige Gegendruck aufgebracht wird.

5. Verfahren nach einem der Ansprüche 1 bis 4, **dadurch gekennzeichnet,** daß die laser-beaufschlagten Oberflächen vor dem physischen Kontakt durch Schutzgas vor Oxidation geschützt werden.

6. Verfahren nach einem der Ansprüche 1 bis 5, **dadurch gekennzeichnet,** daß ein parallel zum Fügespalt linienförmig fokussierbarer Laserstrahl benutzt wird, dessen Fokusbreite bei geometrisch starrer Anordnung und kontinuierlicher bzw. gepulster Einkopplung die Breite der Fügezone bestimmt.

7. Verfahren nach einem der Ansprüche 1 bis 6, **dadurch gekennzeichnet,** daß die Breite der Fügezone erweitert wird, indem der in den Fügespalt fokussierte Laserstrahl wiederholt parallel zum Fügespalt bewegt wird.

8. Verfahren nach Anspruch 7, **dadurch gekennzeichnet,** daß der Laserstrahl durch ein Scanning-System parallel zum Fügespalt bewegt wird.

9. Verfahren nach einem der Ansprüche 1 bis 8, **dadurch gekennzeichnet,** daß der in einem Umformstich hergestellte Werkstoffverbund durch Kaltwalzen eine weitere Dickenreduktion erfährt.

10. Verfahren nach einem der Ansprüche 1 bis 9, **dadurch gekennzeichnet,** daß der Werkstoffverbund durch Glühen in einen Zustand verbesserter Umformbarkeit überführt wird.

11. Anwendung des Verfahrens nach Anspruch 1 bis 10 für die Verbindung von Blechen/Bändern aus Stahl, Aluminium, Kupfer oder Messing.

**Claims**

1.  A process for the joining of strips and/or sheets of metallic materials, wherein at least two strips and/or sheets are introduced offset from one another with reference to their longitudinal axes and overlapping one another and continuously converging on one another at an acute angle into a roll nip and are pressed on to one another in a roll pass, so that they are completely or partially rigidly connected to one another at their surfaces brought into contact whereby in the case of the sheets/strips having no low-melted metallic surfaces, at least one sheet and/or strip of the sheet/strips to be brought into contact is completely or partially heated, but not melted by a laser beam on its surface immediately prior to physical contact in the roll nip, characterized in that during pressing on to one another the shearing-off of the softer sheet/strip of the overlapping zone is prevented by counterpressure.

2.  A process for the joining of strips and/or sheets of metallic materials, wherein at least two strips and/or sheets are introduced offset from one another with reference to their longitudinal axes and overlapping one another and continuously converging on one another at an acute angle into a roll nip and are pressed on to one another in a roll pass, so that they are completely or partially rigidly connected to one another at their surfaces brought into contact, whereby in the case of strips and/or sheets having comparatively low-melting metallic surfaces, at least one sheet and/or strip of the sheets/strips to be brought into contact is completely or partially heated by a laser beam on its surface immediately prior to physical contact in the roll nip but not melted, with the exception of its low-melting surface, characterized in that during pressing on to one another the shearing-off of the softer sheet/strips is prevented in the overlap zone by counterpressure.

3.  A process according to claims 1 or 2,
    characterized in that the energy density of the laser beam is lower than 3kWh/m$^2$ in the zone of the surface treated by the laser.

4.  A process according to one of claims 1 to 3,
    characterized in that the required counterpressure is applied either by an underlay strip or by an adequate calibrated roll at the side of sheet or strip with the higher strength.

5.  A process according to one of claims 1 to 4,
    characterized in that the laser-treated surfaces are protected against oxidation by a protective gas prior to physical contact.

6.  A process according to one of claims 1 to 5,
    characterized in that a laser beam is used which is linearly focusable parallel with the roll nip and whose width of focus determines the width of the joining zone with a geometrically rigid arrangement and continuous or pulsed coupling.

7.  A process according to one of claims 1 to 6, characterized in that the width of the joining zone is extended by the laser beam focused into the roll nip being moved repeatedly parallel with the roll nip.

8.  A process according to claim 7, characterized in that the laser beam is moved parallel with the roll nip by a scanning system.

9.  A process according to one of claims 1 to 8, characterized in that the material composite produced in one roll pass undergoes a further reduction of thickness by cold rolling.

10. A process according to one of claims 1 to 9, characterized in that the material laminate is converted to a state of improved shapeability by annealing.

11. Use of the process according to claims 1 to 10 for the connection of sheets/strips of steel, aluminium, copper or brass.

**Revendications**

1.  Procédé pour joindre des feuillards et/ou des tôles en matières premières métalliques, dans lequel au moins deux feuillards et/ou tôles sont introduits continuellement, en étant décalés l'un par rapport à l'autre suivant leurs axes longitudinaux, en se chevauchant mutuellement avec un porte-à-faux, et en convergeant mutuellement sous un angle aigu, dans une fente de jonction, et sont pressés l'un sur l'autre dans une passe de déformation de façon telle qu'ils sont reliés l'une à l'autre complètement ou partiellement, de façon rigide, par leurs surfaces mises en contact, procédé dans lequel, en cas de feuillards et/ou tôles qui ne présentent pas de surfaces métalliques à bas point de fusion, au moins une tôle et/ou un feuillard des tôles/feuillards destinés à être mis en contact est chauffé totalement ou partiellement sur sa surface, sans toutefois être fondu, par un faisceau laser, immédiatement avant le contact physique dans la fente de jonction, caractérisé en ce que, lors du pressage l'un sur l'autre, un cisaillement de la zone en porte-à-faux de la tôle/du feuillard plus mou est empêché par une contre-pression.

2. Procédé pour joindre des feuillards et/ou des tôles en matières premières métalliques, dans lequel au moins deux feuillards et/ou tôles sont introduits continuellement, en étant décalés l'un par rapport à l'autre suivant leurs axes longitudinaux, en se chevauchant mutuellement avec un porte-à-faux, et en convergeant mutuellement sous un angle aigu dans une fente de jonction, et sont pressés l'un sur l'autre dans une passe de déformation de façon telle qu'ils sont reliés l'un à l'autre complètement ou partiellement, de façon rigide, par leurs surfaces mises en contact, procédé dans lequel, en cas des feuillards et/ou tôles qui présentent des surfaces métalliques à point de fusion comparativement bas, au moins une tôle et/ou feuillard des tôles/feuillards destinés à être mis en contact est chauffé par un faisceau laser, totalement ou partiellement, sur sa surface, sans toutefois être fondu à l'exception de sa surface à bas point de fusion, immédiatement avant le contact physique dans la fente de jonction, caractérisé en ce que lors du pressage l'un sur l'autre, un cisaillement de la tôle/du feuillard plus mou dans la zone en porte-à-faux est empêché par une contre-pression.

3. Procédé selon la revendication 1 ou 2 , caractérisé en ce que la densité d'énergie du faisceau laser, dans la zone de la surface soumise au laser, est inférieure à 3 kWh/m$^2$.

4. Procédé selon l'une quelconque des revendications 1 à 3, caractérisé en ce que, sur le côté de la tôle/du feuillard ayant la résistance mécanique plus élevée, la contre-pression nécessaire est appliquée par des bandes envers ou par un cylindre calibré de façon correspondante.

5. Procédé selon l'une quelconque des revendications 1 à 4, caractérisé en ce que les surfaces soumises au laser sont protégées de l'oxydation par un gaz protecteur, avant le contact physique.

6. Procédé selon l'une quelconque des revendications 1 à 5, caractérisé en ce qu'on utilise un faisceau laser pouvant être focalisé en forme de ligne parallèlement à la fente de jonction et dont la largeur de focalisation détermine la largeur de la zone de jonction dans le cas d'un agencement géométrique fixe et d'un régime continu ou pulsé.

7. Procédé selon l'une quelconque des revendications 1 à 6, caractérisé en ce que la largeur de la zone de jonction est élargie en déplaçant le faisceau laser, qui est focalisé sur la fente de jonction, répétitivement et parallèlement par rapport à la fente de jonction.

8. Procédé selon la revendication 7, caractérisé en ce que le faisceau laser est déplacé parallèlement à la fente de jonction par un système de balayage.

9. Procédé selon l'une quelconque des revendications 1 à 8, caractérisé en ce que le composé de matières premières fabriqué dans une passe de déformation est soumis à une réduction d'épaisseur supplémentaire par un laminage à froid.

10. Procédé selon l'une quelconque des revendications 1 à 9, caractérisé en ce que le composé de matières premières est transformé par recuit dans un état de déformabilité améliorée.

11. Utilisation du procédé selon l'une quelconque des revendications 1 à 10, pour la jonction de tôles/feuillards en acier, en aluminium, en cuivre ou en laiton.

$F_w$

$l_b$

a

a

$v_b$

Laserstrahlung

Auflagewerkstoff

$b_2$

Linienintegrator

Grundwerkstoff

$b_1$

a – a

Auflagewerkstoff

Haftungsbereich = $l_b$

Grundwerkstoff

Unterlegstreifen

$b_1$